(19) Europäisches Patentamt
European Patent Office
Office européen des brevets

(11) EP 4 570 571 A1

(12) EUROPEAN PATENT APPLICATION
published in accordance with Art. 153(4) EPC

(43) Date of publication:
18.06.2025 Bulletin 2025/25

(51) International Patent Classification (IPC):
B60L 7/10 (2006.01)

(21) Application number: 22957640.0

(22) Date of filing: 05.09.2022

(52) Cooperative Patent Classification (CPC):
B60L 7/10

(86) International application number:
PCT/CN2022/117074

(87) International publication number:
WO 2024/050665 (14.03.2024 Gazette 2024/11)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Shenzhen Yinwang Intelligent
Technologies Co., Ltd.
Shenzhen, Guangdong 518129 (CN)

(72) Inventors:
• XU, Yan
Shenzhen, Guangdong 518129 (CN)
• LI, Yuhao
Shenzhen, Guangdong 518129 (CN)

• WANG, Wei
Shenzhen, Guangdong 518129 (CN)
• GUO, Zhenhua
Shenzhen, Guangdong 518129 (CN)
• SUN, Long
Shenzhen, Guangdong 518129 (CN)
• SHEN, Tianmin
Shenzhen, Guangdong 518129 (CN)
• LI, Xiao
Shenzhen, Guangdong 518129 (CN)

(74) Representative: Thun, Clemens
Mitscherlich PartmbB
Patent- und Rechtsanwälte
Karlstraße 7
80333 München (DE)

(54) VEHICLE CONTROL METHOD AND APPARATUS, VEHICLE, AND STORAGE MEDIUM

(57) A vehicle control method and apparatus, a vehicle, a computer-readable storage medium, and a computer program are provided. The control method includes: obtaining a target torque; generating a damping torque based on at least one of an equivalent moment of inertia at a wheel end of a vehicle and a motor rotational speed fluctuation frequency of the vehicle; and controlling, based on the damping torque and the target torque, the vehicle to perform energy recovery.

Obtain a target torque — S101

Generate a damping torque based on at least one of an equivalent moment of inertia at a wheel end of a vehicle and a motor rotational speed fluctuation frequency of the vehicle — S102

Control, based on the damping torque and the target torque, the vehicle to perform energy recovery — S103

FIG. 3

EP 4 570 571 A1

## Description

### TECHNICAL FIELD

This application relates to the field of automobile technologies, and in particular, to a vehicle control method and apparatus, a vehicle, and a storage medium.

### BACKGROUND

An energy recovery system of a vehicle can recover redundant kinetic energy of the vehicle during braking or coasting, and the redundant energy is recovered and stored in a form of electric energy.

If the energy recovery system works when the vehicle passes through a bumpy road, a slippery road, or the like, bumping or slipping of the vehicle is deteriorated. As a result, a slip ratio of the vehicle exceeds a threshold, and an anti-lock braking system (antilock brake system, ABS) or a dynamic traction control (dynamic tractive control, DTC) system is activated, causing the energy recovery system to stop working.

Under a road condition of the bumpy road, the slippery road, or the like, a deceleration of the vehicle is suddenly decreased when the energy recovery system stops working. In this case, a driver may fail to brake in time to supplement a braking force, which is prone to cause an accident. In addition, it takes a long time for the energy recovery system to resume work, and consequently the vehicle cannot perform energy recovery for a long time.

### SUMMARY

This application provides a vehicle control method and apparatus, a vehicle, and a storage medium. In the method, an appropriate torque is generated to control a motor, so that bumping or slipping of the vehicle is not deteriorated, to avoid activation of an ABS or a DTC system, and avoid an energy recovery system stopping working.

According to a first aspect, this application provides a vehicle control method. The method may be performed by a motor control unit or a motor control module in a vehicle domain controller. Steps of the method include: obtaining a target torque; generating a damping torque based on at least one of an equivalent moment of inertia at a wheel end of a vehicle and a motor rotational speed fluctuation frequency of the vehicle; and controlling, based on the damping torque and the target torque, the vehicle to perform energy recovery.

Herein, the target torque is torque required by a driver, and may be provided by a torque management module in the vehicle domain controller. The damping torque is torque used to alleviate or eliminate bumping of the vehicle. In an implementation of this application, the damping torque is calculated based on at least one of the equivalent moment of inertia at the wheel end of the vehicle and the motor rotational speed fluctuation frequency of the vehicle. In other words, the damping torque is not fixed, but may change based on changes of the foregoing two parameters, so that the damping torque is more suitable for a current status of the vehicle.

The equivalent moment of inertia at the wheel end is a moment of inertia equivalently applied to the wheel end, and reflects a status of a wheel (a state such as being close to the ground, rising into the air, or slipping). On a bumpy road, a slippery road, or the like, the equivalent moment of inertia at the wheel end decreases abnormally. The motor rotational speed fluctuation frequency is a frequency of fluctuation generated in a motor rotational speed signal. On the bumpy road, the slippery road, or the like, the motor rotational speed fluctuation frequency is to be abnormal.

In this embodiment of this application, the damping torque is generated based on at least one of the equivalent moment of inertia at the wheel end and the motor rotational speed fluctuation frequency, and then the vehicle is controlled based on the damping torque and the target torque together to perform energy recovery. Because the equivalent moment of inertia at the wheel end and the motor rotational speed fluctuation frequency reflect a road condition, the appropriate damping torque may be determined based on at least one of the two values. Therefore, when the vehicle is controlled based on the damping torque and the target torque to perform energy recovery, bumping or slipping of the vehicle is not deteriorated, to avoid activation of an ABS or a DTC system, and avoid an energy recovery system stopping working, thereby ensuring driving safety and normal energy recovery.

The vehicle control method provided in this application is applicable to vehicles in various driving forms, including but not limited to front-wheel drive, rear-wheel drive, wheel-rim drive, hub drive, and four-wheel drive. For the foregoing driving manners, the vehicle may be driven by using a single motor or two or more motors. In a case of a single motor, control only needs to be performed on the single motor by using the control method in this application. For two or more motors, each motor may be separately controlled by using the control method provided in this application, and control processes of the motors are independent of each other and do not interfere with each other. It can be learned that the vehicle control method provided in this application is applicable to vehicles in various driving forms, and has a wide application scope. In addition, in a case of a plurality of motors, according to the control method, control only needs to be separately performed on each motor, the motors do not interfere with each other, and control logic is simple and easy to implement.

It should be noted that, for different motors, because wheels connected to the motors are different, when equivalent moments of inertia at wheel ends are calculated, the wheel ends are also different.

In a possible implementation of this application, the generating a damping torque based on at least one of an equivalent moment of inertia at a wheel end of a vehicle and a motor rotational speed fluctuation frequency of the vehicle includes: determining the equivalent moment of inertia at the wheel end of the vehicle; determining the motor rotational speed fluctuation frequency of the vehicle; and generating the damping torque based on at least one of the equivalent moment of inertia at the wheel end of the vehicle and the motor rotational speed fluctuation frequency of the vehicle.

In this implementation, the damping torque is determined based on the equivalent moment of inertia at the wheel end of the vehicle and the motor rotational speed fluctuation frequency of the vehicle. Because both the equivalent moment of inertia at the wheel end and the motor rotational speed fluctuation frequency are used, the determined damping torque is more suitable for a current road condition, and effect of suppressing bumping or slipping is better. In addition, robustness and adaptability of the control method are further improved, and effect on the vehicle is better.

In another possible implementation of this application, the generating a damping torque based on at least one of an equivalent moment of inertia at a wheel end of a vehicle and a motor rotational speed fluctuation frequency of the vehicle includes: determining the equivalent moment of inertia at the wheel end of the vehicle; and generating the damping torque based on the equivalent moment of inertia at the wheel end; or determining the motor rotational speed fluctuation frequency of the vehicle; and generating the damping torque based on the motor rotational speed fluctuation frequency.

For example, the determining the equivalent moment of inertia at the wheel end of the vehicle includes: obtaining a rotational speed of a motor; and determining the equivalent moment of inertia at the wheel end of the vehicle based on an output torque of the motor and the rotational speed of the motor.

The rotational speed of the motor may be a rotational speed of the motor at a moment, or may be an average value, a peak value, a valley value, or the like of rotational speeds of the motor within a period of time. The rotational speed of the motor may be obtained by using a motor resolver sensor.

The output torque of the motor is a detected output torque of the motor, and may be an output torque at a moment, or may be an average value, a peak value, a valley value, or the like of output torques within a period of time. The output torque may be stored in the motor control unit or the motor control module in the vehicle domain controller each time the motor of the vehicle is controlled.

In this implementation, the equivalent moment of inertia at the wheel end of the vehicle is calculated based on the rotational speed of the motor and the output torque of the motor. The two values are easy to obtain, and the two values are related only to motor calculation and are not related to another mechanism of the vehicle, so that implementation of calculating the equivalent moment of inertia at the wheel end is convenient.

In a possible implementation of this application, the determining the motor rotational speed fluctuation frequency of the vehicle includes: obtaining a first rotational speed signal of the motor; filtering the first rotational speed signal of the motor by using band-pass filters with different center frequencies; and determining the motor rotational speed fluctuation frequency based on filtering results of the band-pass filters with different center frequencies.

The first rotational speed signal is a signal formed by rotational speeds of the motor that are continuously collected within a period of time.

In this implementation, different band-pass filters are used to filter the first rotational speed signal. The band-pass filter can output only a signal that meets a frequency band requirement. Therefore, it is determined, based on the filtering results of the band-pass filters, that a center frequency of a band-pass filter whose filtering result is outputting the first rotational speed signal is a frequency of the first rotational speed signal, namely, the motor rotational speed fluctuation frequency. The motor rotational speed fluctuation frequency is determined through filtering performed by the band-pass filter, and no calculation processing is required. In addition, this manner can be integrated into the motor control unit or the motor control module in the vehicle domain controller, and is convenient to implement.

In another possible implementation of this application, the motor rotational speed fluctuation frequency may alternatively be calculated in another manner. For example, the motor rotational speed fluctuation frequency is calculated based on a resolver signal.

For example, a magnitude of the equivalent moment of inertia at the wheel end is negatively correlated with a magnitude of the damping torque. To be specific, a larger equivalent moment of inertia at the wheel end indicates a smaller damping torque, and a smaller equivalent moment of inertia at the wheel end indicates a larger damping torque. Because the foregoing relationship exists between the equivalent moment of inertia at the wheel end and the damping torque, the magnitude of the damping torque may be determined based on the magnitude of the equivalent moment of inertia at the wheel end, to implement control on the vehicle based on the damping torque.

For example, a magnitude of the motor rotational speed fluctuation frequency is negatively correlated with a magnitude of the damping torque. To be specific, a larger motor rotational speed fluctuation frequency indicates a smaller damping torque, and a smaller motor rotational speed fluctuation frequency indicates a larger damping torque. Because the foregoing relationship exists between the motor rotational speed fluctuation frequency and the damping torque, the magnitude of the damping torque may be determined based on the magnitude of the motor rotational speed fluctuation frequency, to implement control on the vehicle based on the damping torque.

In a possible implementation of this application, the generating the damping torque based on the equivalent moment of inertia at the wheel end of the vehicle and the motor rotational speed fluctuation frequency of the vehicle includes:

determining a corresponding first factor based on the equivalent moment of inertia at the wheel end; determining a corresponding second factor based on the motor rotational speed fluctuation frequency; and multiplying the first factor and the second factor by an absolute value of the target torque, to obtain the damping torque.

In this implementation, the first factor is determined based on the equivalent moment of inertia at the wheel end, the second factor is determined based on the motor rotational speed fluctuation frequency, and then the appropriate damping torque is determined based on the first factor, the second factor, and the target torque. Because the first factor and the second factor are respectively determined based on the equivalent moment of inertia at the wheel end and the motor rotational speed fluctuation frequency, the damping torque determined based on the first factor and the second factor has better effect of suppressing bumping or slipping.

For example, the determining a corresponding first factor based on the equivalent moment of inertia at the wheel end includes: obtaining, based on a correspondence between an equivalent moment of inertia at a wheel end and a first factor, the first factor corresponding to the equivalent moment of inertia at the wheel end. A magnitude of the first factor is negatively correlated with end the magnitude of the equivalent moment of inertia at the wheel end.

The magnitude of the first factor is negatively correlated with the magnitude of the equivalent moment of inertia at the wheel end. To be specific, a smaller equivalent moment of inertia at the wheel end indicates a larger first factor, and a larger equivalent moment of inertia at the wheel end indicates a smaller first factor.

In this implementation, the correspondence between an equivalent moment of inertia at a wheel end and a first factor may be determined in advance through an experiment, and the correspondence is stored in the motor control module or the motor control unit, to facilitate determining of the first factor and ensure precision of the first factor.

For example, the determining a corresponding second factor based on the motor rotational speed fluctuation frequency includes: obtaining, based on a correspondence between a motor rotational speed fluctuation frequency and a second factor, the second factor corresponding to the motor rotational speed fluctuation frequency. A magnitude of the second factor is negatively correlated with the magnitude of the motor rotational speed fluctuation frequency.

The magnitude of the second factor is negatively correlated with the magnitude of the motor rotational speed fluctuation frequency. To be specific, a smaller motor rotational speed fluctuation frequency indicates a larger second factor, and a larger motor rotational speed fluctuation frequency indicates a smaller second factor.

In this implementation, the correspondence between a motor rotational speed fluctuation frequency and a second factor may be determined in advance through an experiment, and the correspondence is stored in the motor control module or the motor control unit, to facilitate determining of the second factor and ensure precision of the second factor.

In another possible implementation of this application, the generating the damping torque based on the equivalent moment of inertia at the wheel end of the vehicle and the motor rotational speed fluctuation frequency of the vehicle may alternatively be implemented in another manner. For example, a mapping relationship table of the equivalent moment of inertia at the wheel end, the motor rotational speed fluctuation frequency of the vehicle, the target torque, and the damping torque is determined in advance, and then the mapping relationship table is searched when necessary to obtain the required damping torque.

In an implementation of this application, the controlling, based on the damping torque and the target torque, the vehicle to perform energy recovery includes: generating an energy recovery response torque based on the target torque; adding the damping torque and the energy recovery response torque to obtain an energy recovery torque; and controlling, based on the energy recovery torque, the vehicle to perform energy recovery.

In this implementation, the energy recovery response torque may be determined based on a vehicle condition and the target torque, and then the energy recovery response torque is added to the target torque, so that the finally determined energy recovery torque is more suitable for the vehicle condition, to ensure effect of controlling the vehicle.

For example, the energy recovery response torque may be determined based on a current status of the motor of the vehicle. For example, a preset relationship table is searched based on parameters such as a temperature and a voltage of the motor, to determine the energy recovery response torque corresponding to the current parameters, such as the temperature, the voltage, and the target torque, of the motor.

Herein, the temperature and the voltage of the motor reflect the current status of the motor. When the temperature and the voltage are normal, the status of the motor is normal. In this case, the energy recovery response torque is usually equal to the target torque. When the temperature and/or the voltage are/is abnormal, the status of the motor is abnormal. For example, that the temperature of the motor is excessively high corresponds to an over-temperature abnormal state of the motor. In this case, the energy recovery response torque is usually less than the target torque.

In the foregoing method in which the energy recovery response torque is first determined, and then the energy

EP 4 570 571 A1

recovery torque is determined, control on the torque of the motor is more precise, so that better energy recovery control is implemented.

In this application, after vehicle control is performed based on the determined energy recovery torque, closed-loop control may be further implemented based on a motor condition.

Optionally, the method further includes: obtaining a second rotational speed signal of the motor; determining, based on the second rotational speed signal of the motor, whether the rotational speed of the motor fluctuates abnormally; and if the rotational speed of the motor does not fluctuate abnormally, controlling, based on the target torque, the vehicle to perform energy recovery.

In this implementation, it is determined, based on the rotational speed signal, whether the rotational speed of the motor fluctuates abnormally. When the rotational speed of the motor does not fluctuate abnormally, the motor is directly controlled based on the target torque, to maximize energy recovery effect. In addition, in this manner, the damping torque does not need to be calculated, so that computing resources and time are saved.

A definition of the second rotational speed signal is similar to a definition of the first rotational speed signal, and a difference only lies in that the second rotational speed signal is obtained in a time period after the first rotational speed signal.

For example, the foregoing filtering manner may be used to determine, based on the second rotational speed signal of the motor, whether the rotational speed of the motor fluctuates abnormally. The motor rotational speed fluctuation frequency of the vehicle is determined, and then whether the motor rotational speed fluctuation frequency of the vehicle is within a normal range is determined. If the motor rotational speed fluctuation frequency of the vehicle is within the normal range, it is determined that the rotational speed of the motor does not fluctuate abnormally. If the motor rotational speed fluctuation frequency of the vehicle is not within the normal range, it is determined that the rotational speed of the motor fluctuates abnormally.

For example, the controlling, based on the target torque, the vehicle to perform energy recovery may be first determining the energy recovery response torque based on the target torque, and then controlling the vehicle based on the energy recovery response torque.

Optionally, the method further includes: if the rotational speed of the motor fluctuates abnormally, recalculating the energy recovery torque; and controlling, based on the recalculated energy recovery torque, the vehicle to perform energy recovery.

Herein, a manner of calculating the energy recovery torque is the same as that described above, and details are not described again.

In this implementation, when the rotational speed of the motor fluctuates abnormally, the energy recovery torque is recalculated, and the vehicle is controlled based on the recalculated energy recovery torque. Therefore, when the vehicle is controlled to perform energy recovery, bumping or slipping of the vehicle is not deteriorated, to avoid activation of the ABS or the DTC system, and avoid the energy recovery system stopping working, thereby ensuring driving safety and normal energy recovery.

Optionally, the method further includes: recording a quantity of times or cumulative time of controlling the motor based on the damping torque and the target torque; and if the quantity of times or cumulative time of controlling the motor based on the damping torque and the target torque exceeds a threshold, outputting an adjustment instruction, where the adjustment instruction instructs to adjust a magnitude of the target torque.

The quantity of times or the cumulative time of controlling the motor may be a total quantity of times and total cumulative time of controlling the motor based on the damping torque and the target torque after the vehicle is started, or may be a quantity of times and cumulative time of controlling the motor based on the damping torque and the target torque within a period of time.

In this implementation, if the motor control module or the motor control unit adjusts the target torque for a plurality of times, and controls the motor based on the adjusted energy recovery torque, it indicates that the target torque is not properly set. In this case, the adjustment instruction is sent to the torque management module, so that the torque adjustment module can adjust the magnitude of the output target torque. Usually, the absolute value of the target torque is reduced, for example, adjusted from -100 Nm to -90 Nm, to further prevent a risk of triggering the ABS or the DTC system.

Optionally, the method further includes: recording a quantity of times or cumulative time of controlling the motor based on the damping torque and the target torque; and if the quantity of times or cumulative time of controlling the motor based on the damping torque and the target torque exceeds a threshold, outputting a braking instruction, where the braking instruction instructs a braking system of the vehicle to perform braking.

For example, the braking system of the vehicle may perform braking in at least one of the following manners: hydraulic braking, mechanical friction braking, aerodynamic kit (such as tail wing and vehicle door side) braking.

In this implementation, if the motor control module or the motor control unit adjusts the target torque for a plurality of times, it indicates that the vehicle is in a bumping state for a long time. In this case, a hydraulic braking instruction is used to request a hydraulic braking system of a chassis of the vehicle to perform hydraulic braking, so that the vehicle decelerates. The driver can obtain a same deceleration sense provided by the energy recovery system. In addition, an excessively large braking distance caused by the target torque under an adjustment of the damping torque can be prevented, and driving smoothness and safety are ensured.

According to a second aspect, this application provides a vehicle control apparatus. The apparatus includes:

an obtaining unit, configured to obtain a target torque;
a processing unit, configured to generate a damping torque based on at least one of an equivalent moment of inertia at a wheel end of a vehicle and a motor rotational speed fluctuation frequency of the vehicle; and
a control unit, configured to control, based on the damping torque and the target torque, the vehicle to perform energy recovery.

Optionally, the processing unit is configured to: determine the equivalent moment of inertia at the wheel end of the vehicle; determine the motor rotational speed fluctuation frequency of the vehicle; and generate the damping torque based on at least one of the equivalent moment of inertia at the wheel end of the vehicle and the motor rotational speed fluctuation frequency of the vehicle.

Optionally, the processing unit is configured to: obtain a rotational speed of a motor; and determine the equivalent moment of inertia at the wheel end of the vehicle based on an output torque of the motor and the rotational speed of the motor.

Optionally, the processing unit is configured to: obtain a first rotational speed signal of the motor; filter the first rotational speed signal of the motor by using band-pass filters with different center frequencies; and determine the motor rotational speed fluctuation frequency based on filtering results of the band-pass filters with different center frequencies.

Optionally, a magnitude of the equivalent moment of inertia at the wheel end is negatively correlated with a magnitude of the damping torque.

Optionally, a magnitude of the motor rotational speed fluctuation frequency is negatively correlated with a magnitude of the damping torque.

Optionally, the control unit is configured to: generate an energy recovery response torque based on the target torque; add the damping torque and the energy recovery response torque to obtain an energy recovery torque; and control, based on the energy recovery torque, the vehicle to perform energy recovery.

Optionally, the processing unit is further configured to: obtain a second rotational speed signal of the motor after outputting the energy recovery torque; and determine, based on the second rotational speed signal of the motor, whether the rotational speed of the motor fluctuates abnormally.

The control unit is further configured to: if the rotational speed of the motor does not fluctuate abnormally, control, based on the target torque, the vehicle to perform energy recovery.

Optionally, the apparatus further includes:

a recording unit, configured to record a quantity of times or cumulative time of controlling the motor based on the damping torque and the target torque, where
the control unit is further configured to: if the quantity of times or cumulative time of controlling the motor based on the damping torque and the target torque exceeds a threshold, output an adjustment instruction, where the adjustment instruction instructs to adjust a magnitude of the target torque.

Optionally, the apparatus further includes:

a recording unit, configured to record a quantity of times or cumulative time of controlling the motor based on the damping torque and the target torque, where
the control unit is further configured to: if the quantity of times or cumulative time of controlling the motor based on the damping torque and the target torque exceeds a threshold, output a braking instruction, where the braking instruction instructs a braking system of the vehicle to perform braking.

According to a third aspect, this application provides a vehicle. The vehicle includes the vehicle control apparatus and the motor according to the second aspect. The vehicle control apparatus is connected to the motor.

According to a fourth aspect, this application provides a vehicle control device. The vehicle control device includes a processor and a memory. The memory is configured to store a software program and a module. The processor runs or executes the software program and/or the module stored in the memory, so that the vehicle control device implements the method according to any possible implementation of the first aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into a same chip, or may be separately disposed in different chips. A type of the memory and a manner in which the memory and the processor are disposed are not limited in embodiments of this application.

Optionally, the vehicle control device may be deployed on a public cloud to provide a vehicle control service.

According to a fifth aspect, this application provides a computer program (product). The computer program (product) includes computer program code. When the computer program code is run by a computer, the computer is enabled to perform the method according to any one of the possible implementations of the first aspect.

According to a sixth aspect, this application provides a computer-readable storage medium. The computer-readable storage medium is configured to store program code executed by a processor. The program code includes instructions used to implement the method according to any one of the possible implementations of the first aspect.

According to a seventh aspect, a chip is provided. The chip includes a processor. The processor is configured to invoke, from a memory, instructions stored in the memory and run the instructions, so that a communication device on which the chip is installed performs the method according to any one of the possible implementations of the first aspect.

According to an eighth aspect, another chip is provided. The chip includes an input interface, an output interface, a processor, and a memory. The input interface, the output interface, the processor, and the memory are connected to each other through an internal connection path. The processor is configured to execute code in the memory. When the code is executed, the processor is configured to perform the method according to any one of the possible implementations of the first aspect.

**BRIEF DESCRIPTION OF DRAWINGS**

FIG. 1 is a diagram of a system architecture according to an embodiment of this application;
FIG. 2 is a diagram of a system architecture according to an embodiment of this application;
FIG. 3 is a flowchart of a vehicle control method according to an embodiment of this application;
FIG. 4 is a flowchart of a vehicle control method according to an embodiment of this application;
FIG. 5 is a diagram of a module structure of a motor control module or a motor control unit according to an embodiment of this application;
FIG. 6 is a block diagram of a vehicle control apparatus according to an embodiment of this application; and
FIG. 7 is a diagram of a structure of a vehicle control device according to an example embodiment of this application.

DESCRIPTION OF EMBODIMENTS

To make the objectives, technical solutions, and advantages of this application clearer, the following further describes the implementations of this application in detail with reference to the accompanying drawings.

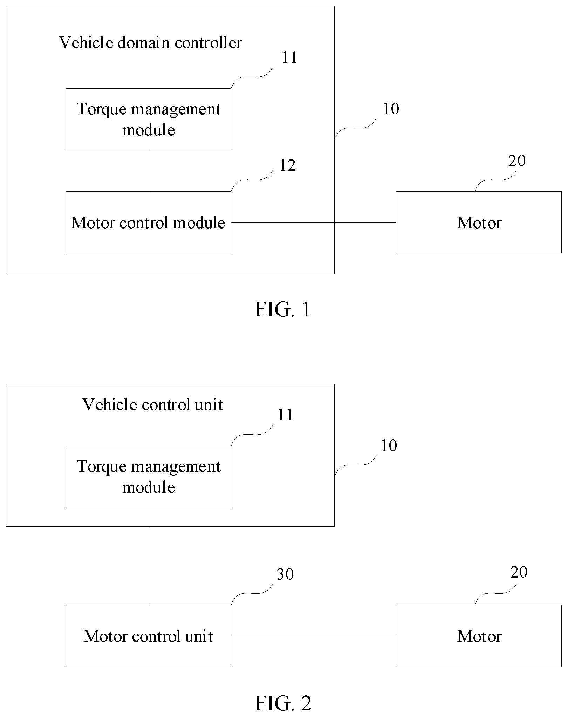

To facilitate understanding of the technical solutions provided in embodiments of this application, a system architecture of this application is first described. The technical solutions provided in embodiments of this application may be applied to a plurality of different system architectures. The following describes two system architectures with reference to FIG. 1 and FIG. 2.

FIG. 1 is a diagram of a system architecture according to an embodiment of this application. Refer to FIG. 1. The system architecture includes a vehicle domain controller (vehicle domain controller, VDC) 10 and a motor 20. The VDC 10 includes a torque management module 11 and a motor control module 12.

In the system architecture, the torque management module 11 sends a target torque to the motor control module 12 in response to a torque requirement of a driver. The motor control module 12 may process the target torque by using a vehicle control method provided in this application, to generate an energy recovery torque that is more suitable for a vehicle, and control the motor 20 by using the energy recovery torque.

FIG. 2 is a diagram of a system architecture according to an embodiment of this application. Refer to FIG. 2. The system architecture includes a vehicle control unit (vehicle control unit, VCU) 10, a motor control unit (motor control unit, MCU) 30, and a motor 20. The VCU 10 includes a torque management module 11.

In the system architecture, the torque management module 11 sends a target torque to the MCU 30 in response to a torque requirement of a driver. The MCU 30 may process the target torque by using a vehicle control method provided in this application, to generate an energy recovery torque that is more suitable for a vehicle, and control the motor 20 by using the energy recovery torque.

In the foregoing two system architectures, the torque management module 11 outputs the target torque. For example, the torque management module 11 may make a decision based on a current throttle opening degree and a current vehicle speed, and output the target torque. For example, a three-dimensional mapping table of a throttle opening degree, a vehicle speed, and a target torque is configured in the torque management module 11, and the table is searched to determine the target torque corresponding to the current throttle opening degree and the current vehicle speed.

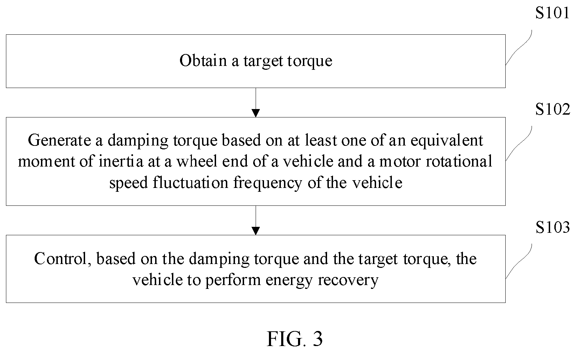

FIG. 3 is a flowchart of a vehicle control method according to an embodiment of this application. The method may be performed by a motor control module or a motor control unit in a system architecture. As shown in FIG. 3, the method includes the following steps.

S101: Obtain a target torque.

Refer to FIG. 1 or FIG. 2. The motor control module or the motor control unit receives the target torque output by a torque management module, where the target torque is a target torque provided by an energy recovery system for a motor of a vehicle.

S102: Generate a damping torque based on at least one of an equivalent moment of inertia at a wheel end of the vehicle and a motor rotational speed fluctuation frequency of the vehicle.

The equivalent moment of inertia at the wheel end is a moment of inertia equivalently applied to the wheel end, and reflects a status of a wheel (for example, a state in which the wheel is in close contact to the ground, rises into the air, or slips). On a bumpy road (for example, the vehicle passes over a speed bump), a slippery road, or another abnormal road (for ease of description, the bumpy road, the slippery road, or the like is used as an example), the equivalent moment of inertia at the wheel end decreases abnormally. Therefore, the equivalent moment of inertia at the wheel end can reflect whether a road is bumpy or slippery. The motor rotational speed fluctuation frequency is a frequency of fluctuation generated in a motor rotational speed signal, and reflects a traveling stability degree of the vehicle. On the bumpy road, the slippery road, or the like, the motor rotational speed fluctuation frequency is to be abnormal. Therefore, the motor rotational speed fluctuation frequency can reflect whether the road is bumpy or slippery.

Both values of the equivalent moment of inertia at the wheel end and the motor rotational speed fluctuation frequency can reflect bumpiness or slipperiness of the road. Therefore, when the road is bumpy or slippery, the appropriate damping torque is generated based on at least one of the equivalent moment of inertia at the wheel end and the motor rotational speed fluctuation frequency, to adjust the target torque and adjust energy recovery strength, so that bumping or slipping of the vehicle can be prevented from being deteriorated due to an energy recovery torque, thereby avoiding triggering of an ABS or a DTC system.

S103: Control, based on the damping torque and the target torque, the vehicle to perform energy recovery.

For example, the target torque is a negative torque. On the bumpy road or the slippery road, if an absolute value of the negative torque is excessively large, bumping or slipping of the vehicle is deteriorated. In this case, the absolute value of the negative torque may be reduced through control performed based on the damping torque (positive torque) and the target torque together, so that bumping or slipping of the vehicle can be prevented from being deteriorated.

Usually, a smaller equivalent moment of inertia and a more slippery or bumpy road indicate a greater damping torque required, and a lower motor rotational speed fluctuation frequency and a more slippery or bumpy road indicate a greater damping torque required.

In this embodiment of this application, the damping torque is generated based on at least one of the equivalent moment of inertia at the wheel end and the motor rotational speed fluctuation frequency, and then the vehicle is controlled based on the damping torque and the target torque together to perform energy recovery. Because the equivalent moment of inertia at the wheel end and the motor rotational speed fluctuation frequency reflect a road condition, the appropriate damping torque may be determined based on at least one of the two values. Therefore, when the vehicle is controlled based on the damping torque and the target torque to perform energy recovery, bumping or slipping of the vehicle is not deteriorated, to avoid activation of the ABS or the DTC system, and avoid the energy recovery system stopping working, thereby ensuring driving safety and normal energy recovery.

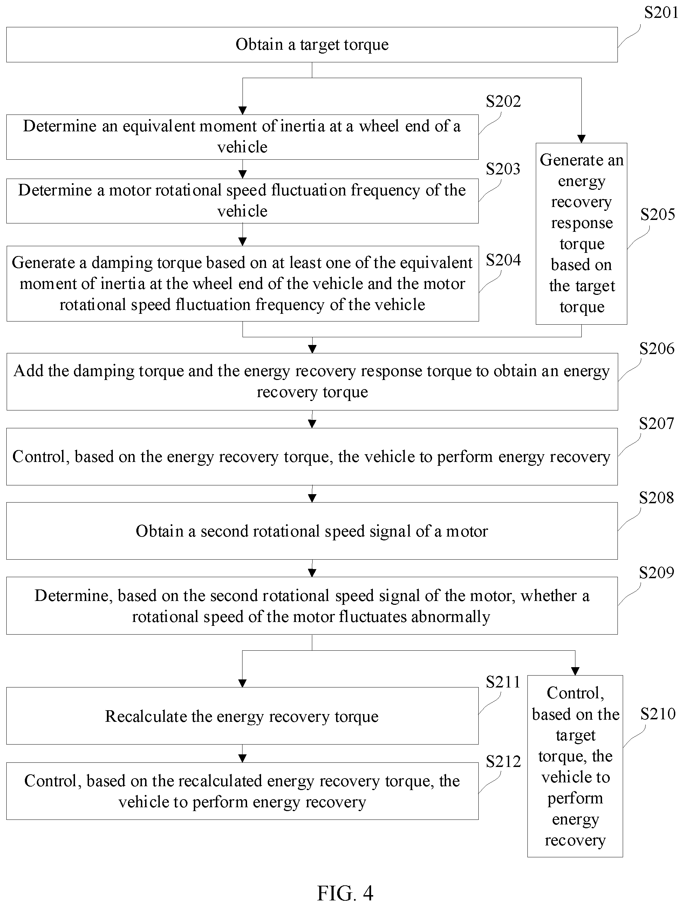

FIG. 4 is a flowchart of a vehicle control method according to an embodiment of this application. The method may be performed by a motor control module or a motor control unit in a system architecture. As shown in FIG. 4, the method includes the following steps.

S201: Obtain a target torque.

Refer to FIG. 1 or FIG. 2. The motor control module or the motor control unit receives the target torque output by a torque management module, where the target torque is a target torque provided by an energy recovery system for a motor of a vehicle.

For example, when the energy recovery system of the vehicle works, the torque management module outputs the target torque as required.

S202: Determine an equivalent moment of inertia at a wheel end of the vehicle.

In a possible implementation of this application, a manner of determining a motor rotational speed fluctuation frequency of the vehicle is as follows:

obtaining a rotational speed of the motor; and
determining the equivalent moment of inertia at the wheel end of the vehicle based on an output torque of the motor and the rotational speed of the motor.

The rotational speed of the motor may be a rotational speed of the motor at a moment, or may be an average value, a peak value, a valley value, or the like of rotational speeds of the motor within a period of time. The rotational speed of the motor may be obtained by using a motor resolver sensor.

The output torque of the motor is a detected output torque of the motor, and may be an output torque at a moment, or may be an average value, a peak value, a valley value, or the like of output torques within a period of time. The output torque may be stored in the motor control unit or the motor control module in a vehicle domain controller each time the motor of the vehicle is controlled.

In this implementation, the equivalent moment of inertia at the wheel end of the vehicle is calculated based on the rotational speed of the motor and the output torque of the motor. The two values are easy to obtain, and the two values are related only to motor calculation and are not related to another mechanism of the vehicle, so that implementation of calculating the equivalent moment of inertia at the wheel end is convenient.

The determining the equivalent moment of inertia at the wheel end of the vehicle based on an output torque of the motor and the rotational speed of the motor may be implemented by using Formula (1):

$$I=J+TL/(dw/dt)=Te/(dw/dt) \tag{1}$$

In Formula (1), I represents the equivalent moment of inertia at the wheel end, J represents a moment of inertia of the motor and a transmission system connected to the motor, TL is a resistance torque provided by the road for a wheel (that is, a resistance torque input by the road), Te is the output torque of the motor, w is the rotational speed of the motor, and dw/dt represents a change rate of the rotational speed of the motor.

Formula (1) is obtained through transformation based on a motor motion equation: Te-TL=J*dw/dt.

The motor control module or the motor control unit calculates the equivalent moment of inertia at the wheel end. On a bumpy road, a slippery road, or the like, for example, in a state in which the wheel rises into the air or slips, because the resistance TL provided by the road for the wheel decreases abnormally, the equivalent moment of inertia I at the wheel end decreases abnormally, and I decreases to be gradually close to J. The motor control module or the motor control unit may output a first factor C(I) based on an abnormal value of I, to implement adaptive control on a damping torque.

S203: Determine the motor rotational speed fluctuation frequency of the vehicle.

In a possible implementation of this application, a manner of determining the motor rotational speed fluctuation frequency of the vehicle is as follows:

obtaining a first rotational speed signal of the motor;
filtering the first rotational speed signal of the motor by using band-pass filters with different center frequencies; and
determining the motor rotational speed fluctuation frequency based on filtering results of the band-pass filters with different center frequencies.

The first rotational speed signal is a signal formed by rotational speeds of the motor that are continuously collected within a period of time.

In this implementation, different band-pass filters are used to filter the first rotational speed signal. The band-pass filter can output only a signal that meets a frequency band requirement. Therefore, it is determined, based on the filtering results of the band-pass filters, that a center frequency of a band-pass filter whose filtering result is outputting the first rotational speed signal is a frequency of the first rotational speed signal, namely, the motor rotational speed fluctuation frequency. The motor rotational speed fluctuation frequency is determined through filtering performed by the band-pass filter, and no calculation processing is required. In addition, this manner can be integrated into the motor control unit or the motor control module in the vehicle domain controller, and is convenient to implement.

The motor control module or motor control unit identifies the motor rotational speed fluctuation frequency. On the bumpy road, the slippery road, or the like, the rotational speed signal of the motor is to fluctuate abnormally. The motor control module or the motor control unit outputs a second factor F(f) based on the abnormal fluctuation, to implement adaptive control on the damping torque.

S204: Generate the damping torque based on at least one of the equivalent moment of inertia at the wheel end of the vehicle and the motor rotational speed fluctuation frequency of the vehicle.

In this implementation, the damping torque is determined based on the equivalent moment of inertia at the wheel end of the vehicle and the motor rotational speed fluctuation frequency of the vehicle. Because both the equivalent moment of inertia at the wheel end and the motor rotational speed fluctuation frequency are used, the determined damping torque is more suitable for a current road condition, and effect of suppressing bumping or slipping is better. In addition, robustness and adaptability of the control method are further improved, and effect on the vehicle is better.

Certainly, in another possible implementation, the damping torque may be determined based on only one of the equivalent moment of inertia at the wheel end of the vehicle and the motor rotational speed fluctuation frequency of the vehicle. Correspondingly, in this case, only one of the equivalent moment of inertia at the wheel end of the vehicle and the motor rotational speed fluctuation frequency of the vehicle is determined, that is, only one of steps S202 and S203 is performed.

In a possible implementation of this application, a manner of generating the damping torque based on at least one of the equivalent moment of inertia at the wheel end of the vehicle and the motor rotational speed fluctuation frequency of the vehicle is as follows:

determining the corresponding first factor based on the equivalent moment of inertia at the wheel end;
determining the corresponding second factor based on the motor rotational speed fluctuation frequency; and
multiplying the first factor and the second factor by an absolute value of the target torque, to obtain the damping torque.

This step is expressed as a formula, and Formula (2) may be obtained:

$$T1=T0*C(J)*F(f) \tag{2}$$

T1 is the damping torque, T0 is the target torque, C(J) is the first factor, and F(f) is the second factor.

For example, when T0 is -100 Nm, C(J) is 0.5, and F(f) is 0.5, T1 is 25 Nm.

In this implementation, the first factor is determined based on the equivalent moment of inertia at the wheel end, the second factor is determined based on the motor rotational speed fluctuation frequency, and then the appropriate damping torque is determined based on the first factor, the second factor, and the target torque. Because the first factor and the second factor are respectively determined based on the equivalent moment of inertia at the wheel end and the motor rotational speed fluctuation frequency, the damping torque determined based on the first factor and the second factor has better effect of suppressing bumping or slipping.

The determining the corresponding first factor based on the equivalent moment of inertia at the wheel end includes:

obtaining, based on a correspondence between an equivalent moment of inertia at a wheel end and a first factor, the first factor corresponding to the equivalent moment of inertia at the wheel end.

A magnitude of the first factor is negatively correlated with a magnitude of the equivalent moment of inertia at the wheel end. To be specific, a smaller equivalent moment of inertia at the wheel end indicates a larger first factor, and a larger equivalent moment of inertia at the wheel end indicates a smaller first factor.

In this implementation, the correspondence between an equivalent moment of inertia at a wheel end and a first factor may be determined in advance through an experiment, and the correspondence is stored in the motor control module or the motor control unit, to facilitate determining of the first factor and ensure precision of the first factor.

The determining the corresponding second factor based on the motor rotational speed fluctuation frequency includes:

obtaining, based on a correspondence between a motor rotational speed fluctuation frequency and a second factor, the second factor corresponding to the motor rotational speed fluctuation frequency.

A magnitude of the second factor is negatively correlated with a magnitude of the motor rotational speed fluctuation frequency. To be specific, a smaller motor rotational speed fluctuation frequency indicates a larger second factor, and a larger motor rotational speed fluctuation frequency indicates a smaller second factor.

In this implementation, the correspondence between a motor rotational speed fluctuation frequency and a second factor may be determined in advance through an experiment, and the correspondence is stored in the motor control module or the motor control unit, to facilitate determining of the second factor and ensure precision of the second factor.

S205: Generate an energy recovery response torque based on the target torque.

For example, the energy recovery response torque may be determined based on a current status of the motor of the vehicle. For example, a preset relationship table is searched based on parameters such as a temperature and a voltage of the motor, to determine the energy recovery response torque corresponding to the current parameters, such as the temperature, the voltage, and the target torque, of the motor.

Herein, the temperature and the voltage of the motor reflect the current status of the motor. When the temperature and the voltage are normal, the status of the motor is normal. In this case, the energy recovery response torque is usually equal to the target torque. When the temperature and/or the voltage are/is abnormal, the status of the motor is abnormal. For example, that the temperature of the motor is excessively high corresponds to an over-temperature abnormal state of the motor. In this case, the energy recovery response torque is usually less than the target torque.

In the foregoing method in which the energy recovery response torque is first determined, and then an energy recovery torque is determined, control on the torque of the motor is more precise, so that better energy recovery control is implemented.

It should be noted that when the damping torque is determined based on only one of the equivalent moment of inertia at the wheel end of the vehicle and the motor rotational speed fluctuation frequency of the vehicle, a correspondence between an equivalent moment of inertia at a wheel end and a first factor or a correspondence between a motor rotational speed fluctuation frequency and a second factor is usually different from the correspondence between an equivalent moment of inertia at a wheel end and a first factor or the correspondence between a motor rotational speed fluctuation frequency and a second factor that exists when the damping torque is determined based on both the equivalent moment of inertia at the wheel end of the vehicle and the motor rotational speed fluctuation frequency of the vehicle.

S206: Add the damping torque and the energy recovery response torque to obtain the energy recovery torque.

The damping torque T1 is applied on the basis of the energy recovery response torque T2, to obtain the energy recovery torque T3, as shown in Formula (3):

$$T3=T2+T1 \tag{3}$$

S207: Control, based on the energy recovery torque, the vehicle to perform energy recovery.

In this step, the motor control module or the motor control unit outputs the energy recovery torque to the motor, to implement control on the motor.

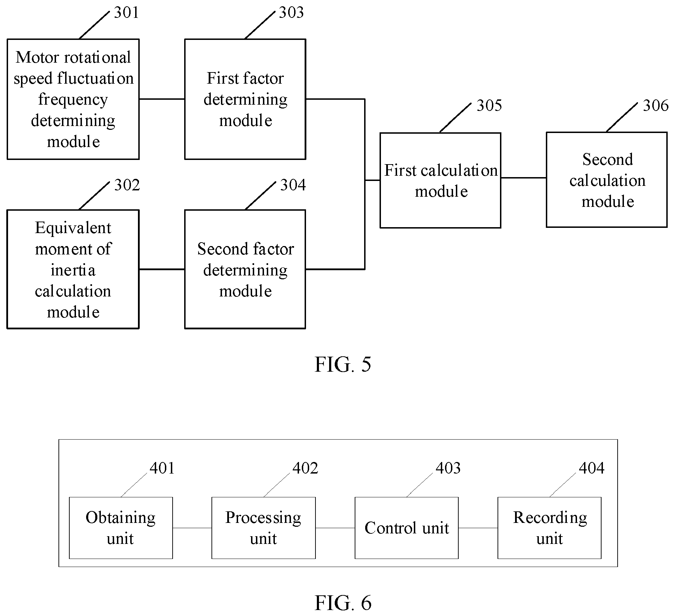

FIG. 5 is a diagram of a module structure of a motor control module or a motor control unit according to an embodiment of this application. Refer to FIG. 5. The motor control module or the motor control unit includes: a motor rotational speed fluctuation frequency determining module 301, an equivalent moment of inertia calculation module 302, a first factor determining module 303, a second factor determining module 304, a first calculation module 305, and a second calculation module 306.

The motor rotational speed fluctuation frequency determining module 301 is configured to perform step S203, and the equivalent moment of inertia calculation module 302 is configured to perform step S202. The foregoing two modules perform step S202 and step S203, so that whether the road is a normal road or an abnormal road (the bumpy road or the slippery road) can be determined, to apply the damping torque for an adjustment when the road is the abnormal road. The damping torque acts on the motor, and acts equivalently on the wheel, to implement control on a vehicle speed and finally achieve effect that a slip ratio is controlled, and a case in which the wheel is locked due to energy recovery, or a case in which an ABS or a DTC system is activated because the slip ratio exceeds a threshold is avoided.

The first factor determining module 303, the second factor determining module 304, and the first calculation module 305 are configured to perform step S204, and the second calculation module 306 is further configured to perform steps S205 to S207.

The foregoing modules 301 to 306 may be loaded in a form of software in the motor control module or the motor control unit of the vehicle, or may be separately loaded in a form of software in a software installation package of the vehicle. In this manner, the modules may be preinstalled first and then upgraded by using an over-the-air technology (over-the-air technology, OTA).

S208: Obtain a second rotational speed signal of the motor.

A definition of the second rotational speed signal is similar to a definition of the first rotational speed signal, and a difference only lies in that the second rotational speed signal is obtained in a time period after the first rotational speed signal.

The time period in which the second rotational speed signal is collected exists after the vehicle is controlled, based on the energy recovery torque, to perform energy recovery, and a time period in which the first rotational speed signal is collected exists before the vehicle is controlled, based on the energy recovery torque, to perform energy recovery.

S209: Determine, based on the second rotational speed signal of the motor, whether the rotational speed of the motor fluctuates abnormally; and if the rotational speed of the motor does not fluctuate abnormally, step S210 is performed; or if the rotational speed of the motor fluctuates abnormally, steps S211 and S212 are performed.

In this step, determining whether the motor fluctuates abnormally may also be implemented by using the band-pass filter. The band-pass filters with different center frequencies are used to filter the second rotational speed signal. The frequencies of the band-pass filters herein correspond to abnormal frequencies of the rotational speed signal, and these abnormal frequencies are not generated during stable traveling. If a band-pass filter can output a frequency signal after filtering, it is considered that the rotational speed of the motor fluctuates abnormally. If no band-pass filter can output a frequency signal after filtering, it is considered that the rotational speed of the motor does not fluctuate abnormally.

S210: Control, based on the target torque, the vehicle to perform energy recovery.

When the rotational speed of the motor does not fluctuate abnormally, the motor is directly controlled based on the target torque, to maximize energy recovery effect. In addition, in this manner, the damping torque does not need to be calculated, so that computing resources and time are saved.

For example, the controlling, based on the target torque, the vehicle to perform energy recovery may be first determining the energy recovery response torque based on the target torque, and then controlling the vehicle based on the energy recovery response torque.

S211: Recalculate the energy recovery torque.

If the motor still fluctuates abnormally after the motor is controlled based on the energy recovery torque in step S207, the equivalent moment of inertia at the wheel end and the motor rotational speed fluctuation frequency may be recalculated, an adaptive adjustment factor may be recalculated, and then the energy recovery torque is calculated.

Herein, a manner of calculating the energy recovery torque is the same as that in steps S202 to S206, and details are not described again.

S212: Control, based on the recalculated energy recovery torque, the vehicle to perform energy recovery.

In this step, the motor control module or the motor control unit outputs the recalculated energy recovery torque to the motor, to implement control on the motor.

In this implementation, based on feedback of the second rotational speed signal of the motor, the target torque or the energy recovery torque is selected for output, to implement closed-loop control and improve control stability.

Optionally, the method may further include: recording a quantity of times or cumulative time of controlling the motor based on the damping torque and the target torque; and if the quantity of times or cumulative time of controlling the motor based on the damping torque and the target torque exceeds a threshold, outputting an adjustment instruction, where the adjustment instruction instructs to adjust a magnitude of the target torque.

The quantity of times or the cumulative time of controlling the motor may be a total quantity of times and total cumulative time of controlling the motor based on the damping torque and the target torque after the vehicle is started, or may be a quantity of times and cumulative time of controlling the motor based on the damping torque and the target torque within a period of time.

If the motor control module or the motor control unit adjusts the target torque for a plurality of times, and controls the motor based on the adjusted energy recovery torque, it indicates that the target torque is not properly set. In this case, the adjustment instruction is sent to the torque management module, so that the torque adjustment module can adjust the magnitude of the output target torque. Usually, the absolute value of the target torque is reduced, for example, adjusted from -100 Nm to -90 Nm, to further prevent a risk of triggering the ABS or the DTC system.

Optionally, the method may further include: recording a quantity of times or cumulative time of controlling the motor based on the damping torque and the target torque; and if the quantity of times or cumulative time of controlling the motor based on the damping torque and the target torque exceeds a threshold, outputting a braking instruction, where the braking instruction instructs a braking system of the vehicle to perform braking.

For example, the braking system of the vehicle may perform braking in at least one of the following manners: hydraulic braking, mechanical friction braking, aerodynamic kit (such as tail wing and vehicle door side) braking.

If the motor control module or the motor control unit adjusts the target torque for a plurality of times, it indicates that the vehicle is in a bumping state for a long time. In this case, a hydraulic braking instruction is used to request a hydraulic braking system of a chassis of the vehicle to perform hydraulic braking, so that the vehicle decelerates. A driver can obtain a same deceleration sense provided by the energy recovery system. In addition, an excessively large braking distance caused by the target torque under an adjustment of the damping torque can be prevented, and driving smoothness and safety are ensured.

FIG. 6 is a block diagram of a vehicle control apparatus according to an embodiment of this application. The vehicle control apparatus may be implemented as all or a part of a motor control module or a motor control unit by using software, hardware, or a combination thereof. The vehicle control apparatus may include an obtaining unit 401, a processing unit 402, and a control unit 403.

The obtaining unit 401 is configured to obtain a target torque.

The processing unit 402 is configured to generate a damping torque based on at least one of an equivalent moment of inertia at a wheel end of a vehicle and a motor rotational speed fluctuation frequency of the vehicle.

The control unit 403 is configured to control, based on the damping torque and the target torque, the vehicle to perform energy recovery.

Optionally, the processing unit 402 is configured to: determine the equivalent moment of inertia at the wheel end of the vehicle; determine the motor rotational speed fluctuation frequency of the vehicle; and generate the damping torque based on at least one of the equivalent moment of inertia at the wheel end of the vehicle and the motor rotational speed fluctuation frequency of the vehicle.

Optionally, the processing unit 402 is configured to: obtain a rotational speed of a motor; and determine the equivalent moment of inertia at the wheel end of the vehicle based on an output torque of the motor and the rotational speed of the motor.

Optionally, the processing unit 402 is configured to: obtain a first rotational speed signal of the motor; filter the first rotational speed signal of the motor by using band-pass filters with different center frequencies; and determine the motor rotational speed fluctuation frequency based on filtering results of the band-pass filters with different center frequencies.

Optionally, a magnitude of the equivalent moment of inertia at the wheel end is negatively correlated with a magnitude of the damping torque.

Optionally, a magnitude of the motor rotational speed fluctuation frequency is negatively correlated with a magnitude of the damping torque.

Optionally, the control unit 403 is configured to: generate an energy recovery response torque based on the target torque; add the damping torque and the energy recovery response torque to obtain an energy recovery torque; and control, based on the energy recovery torque, the vehicle to perform energy recovery.

Optionally, the processing unit 402 is further configured to: obtain a second rotational speed signal of the motor after outputting the energy recovery torque; and determine, based on the second rotational speed signal of the motor, whether the rotational speed of the motor fluctuates abnormally.

The control unit 403 is further configured to: if the rotational speed of the motor does not fluctuate abnormally, control, based on the target torque, the vehicle to perform energy recovery.

Optionally, the apparatus further includes:

a recording unit 404, configured to record a quantity of times or cumulative time of controlling the motor based on the damping torque and the target torque, where

the control unit 403 is further configured to: if the quantity of times or cumulative time of controlling the motor based on the damping torque and the target torque exceeds a threshold, output an adjustment instruction, where the adjustment instruction instructs to adjust a magnitude of the target torque.

Optionally, the apparatus further includes:

a recording unit 404, configured to record a quantity of times or cumulative time of controlling the motor based on the damping torque and the target torque, where

the control unit 403 is further configured to: if the quantity of times or cumulative time of controlling the motor based on the damping torque and the target torque exceeds a threshold, output a braking instruction, where the braking instruction instructs a braking system of the vehicle to perform braking.

The processing unit 402 may include the motor rotational speed fluctuation frequency determining module 301, the equivalent moment of inertia calculation module 302, the first factor determining module 303, the second factor determining module 304, and the first calculation module 305 in FIG. 5, and the control unit 403 may include the second calculation module 306 in FIG. 5.

It should be noted that, when the vehicle control apparatus provided in the foregoing embodiment works, division of the foregoing functional units is used as an example for illustration. In actual application, the foregoing functions can be allocated to different functional units and implemented according to a requirement. That is, an inner structure of a device is divided into different functional units, to implement all or some of the functions described above. In addition, the vehicle control apparatus provided in the foregoing embodiment and the vehicle control method embodiments pertain to a same concept. For a specific implementation process of the apparatus, refer to the method embodiments. Details are not described herein again.

The descriptions of procedures corresponding to the foregoing accompanying drawings have respective focuses. For a part that is not described in detail in a procedure, refer to related descriptions of another procedure.

An embodiment of this application further provides a vehicle. The vehicle includes the vehicle control apparatus and the motor shown in FIG. 6, and the vehicle control apparatus is connected to the motor.

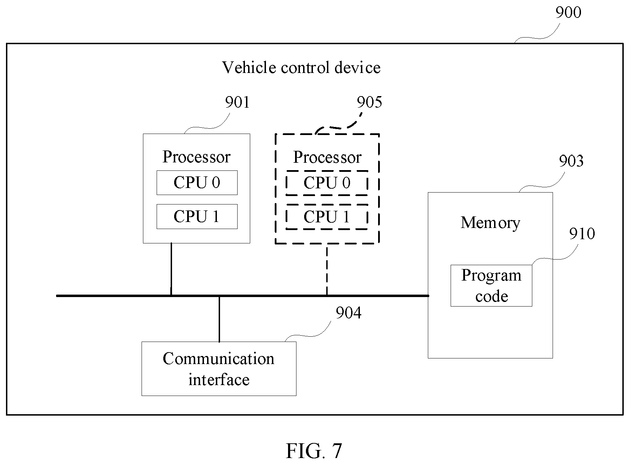

FIG. 7 is a diagram of a structure of a vehicle control device 900 according to an example embodiment of this application. The vehicle control device 900 shown in FIG. 7 is configured to perform operations related to the vehicle control method shown in FIG. 3 or FIG. 4. The vehicle control device 900 may include the foregoing motor control module or motor control unit. The vehicle control device 900 may be implemented by using a general bus architecture.

As shown in FIG. 7, the vehicle control device 900 includes at least one processor 901, a memory 903, and at least one communication interface 904.

The processor 901 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 901 includes an application-specific integrated circuit (application-specific integrated circuit, ASIC), a programmable logic device (programmable logic device, PLD) or another programmable logic device, a transistor logic device, a hardware component, or any combination thereof. The PLD is, for example, a complex programmable logic device (complex programmable logic device, CPLD), a field-programmable gate array (field-programmable gate array, FPGA), a generic array logic (generic array logic, GAL), or any combination thereof. The processor may implement or execute various logical blocks, modules, and circuits described with reference to the content disclosed in embodiments of the present invention. Alternatively, the processor may be a combination of processors implementing a computing function, for example, a combination of one or more microprocessors, or a combination of a DSP and a microprocessor.

Optionally, the vehicle control device 900 further includes a bus. The bus is configured to transmit information between components of the vehicle control device 900. The bus may be a peripheral component interconnect (peripheral component interconnect, PCI for short) bus, an extended industry standard architecture (extended industry standard architecture, EISA for short) bus, or the like. The bus may be categorized as an address bus, a data bus, a control bus, or the like. For ease of representation, only one bold line represents the bus in FIG. 7, but this does not mean that there is only one bus or only one type of bus.

The memory 903 is, for example, a read-only memory (read-only memory, ROM) or another type of static storage device that can store static information and instructions, or a random access memory (random access memory, RAM) or another type of dynamic storage device that can store information and instructions, or an electrically erasable programmable read-only memory (electrically erasable programmable read-only Memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium that can be configured to carry or store expected program code that has a form of an instruction or a data structure and that is accessible to a computer, but is not limited thereto. For example, the memory 903 exists independently, and is connected to the processor 901 through the bus. Alternatively, the memory 903 may be integrated with the processor 901.

The communication interface 904 uses any apparatus such as a transceiver, and is configured to communicate with another device or a communication network. The communication network may be the Ethernet, a radio access network (RAN), a Bluetooth network, or the like. The communication interface 904 may include a wired communication interface, and may further include a wireless communication interface. In this embodiment of this application, the communication interface 904 may be used by the vehicle control device 900 to communicate with another device.

During specific implementation, in an embodiment, the processor 901 may include one or more CPUs, for example, a CPU 0 and a CPU 1 shown in FIG. 7. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the vehicle control device 900 may include a plurality of processors, for example, the processor 901 and a processor 905 shown in FIG. 7. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the vehicle control device 900 may further include an output device and an input device. The output device communicates with the processor 901, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, or a projector (projector). The input device communicates with the processor 901, and may receive an input of a user in a plurality of manners. For example, the input device may be a touchscreen device or a sensing device.

In some embodiments, the memory 903 is configured to store program code 910 for executing the solutions of this application, and the processor 901 may execute the program code 910 stored in the memory 903. In other words, the vehicle control device 900 may implement, by using the processor 901 and the program code 910 in the memory 903, the vehicle control methods provided in the method embodiments. The program code 910 may include one or more software modules. Optionally, the processor 901 may alternatively store program code or instructions for executing the solutions of this application.

In a specific embodiment, the vehicle control device 900 in this embodiment of this application may correspond to the motor control module or the motor control unit in the foregoing method embodiments. The processor 901 in the vehicle control device 900 reads instructions in the memory 903, so that the vehicle control device 900 shown in FIG. 7 can perform all or some operations performed by the motor control module or the motor control unit.

Specifically, the processor 901 is configured to: obtain a target torque; generate a damping torque based on at least one of an equivalent moment of inertia at a wheel end of a vehicle and a motor rotational speed fluctuation frequency of the vehicle; and control, based on the damping torque and the target torque, the vehicle to perform energy recovery.

For brevity, another optional implementation is not described herein again.

The vehicle control device 900 may further correspond to the vehicle control apparatus shown in FIG. 5, and each functional module in the vehicle control apparatus is implemented by using software of the vehicle control device 900. In other words, functional modules included in the vehicle control apparatus are generated after the processor 901 of the vehicle control device 900 reads the program code 910 stored in the memory 903.

The steps of the vehicle control methods shown in FIG. 3 and FIG. 4 are completed by using an integrated logic circuit of hardware in the processor of the vehicle control device 900 or instructions in a form of software. The steps of the methods disclosed with reference to embodiments of this application may be directly performed by a hardware processor, or may be performed by a combination of the hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing methods in combination with the hardware in the processor. To avoid repetition, details are not described herein again.

An embodiment of this application further provides a chip. The chip includes an input interface, an output interface, a processor, and a memory. The input interface, the output interface, the processor, and the memory are connected to each other through an internal connection path. The processor is configured to execute code in the memory. When the code is executed, the processor is configured to perform any one of the foregoing vehicle control methods.

It should be understood that the processor may be a CPU, or may be another general-purpose processor, a DSP, an ASIC, an FPGA or another programmable logic device, a discrete gate or transistor logic device, a discrete hardware component, or the like. The general-purpose processor may be a microprocessor or any conventional processor or the like. It should be noted that the processor may be a processor that supports an ARM architecture.

Further, in an optional embodiment, there are one or more processors and one or more memories. Optionally, the memory may be integrated with the processor, or the memory and the processor are separately disposed. The memory may include a read-only memory and a random access memory, and provide instructions and data to the processor. The memory may further include a non-volatile random access memory. For example, the memory may further store a reference block and a target block.

The memory may be a volatile memory or a non-volatile memory, or may include both a volatile memory and a non-volatile memory. The non-volatile memory may be a ROM, a PROM, an EPROM, an EEPROM, or a flash memory. The volatile memory may be a RAM, and serves as an external cache. By way of example but not limitation, many forms of RAMs may be used, for example, an SRAM, a DRAM, an SDRAM, a DDR SDRAM, an ESDRAM, an SLDRAM, and a DR RAM.

An embodiment of this application further provides a computer-readable storage medium. The computer-readable storage medium stores computer instructions. When the computer instructions stored in the computer-readable storage medium are executed by a computer device, the computer device is enabled to perform the vehicle control method provided above.

An embodiment of this application further provides a computer program product including instructions. When the computer program product is run on a computer device, the computer device is enabled to perform the vehicle control method provided above.

All or some of the foregoing embodiments may be implemented by using software, hardware, firmware, or any combination thereof. When software is used to implement the embodiments, all or a part of the embodiments may be implemented in a form of computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid State Disk)), or the like.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A vehicle control method, wherein the method comprises:

    obtaining a target torque;

generating a damping torque based on at least one of an equivalent moment of inertia at a wheel end of a vehicle and a motor rotational speed fluctuation frequency of the vehicle; and

controlling, based on the damping torque and the target torque, the vehicle to perform energy recovery.

2. The method according to claim 1, wherein the generating a damping torque based on at least one of an equivalent moment of inertia at a wheel end of a vehicle and a motor rotational speed fluctuation frequency of the vehicle comprises:

determining the equivalent moment of inertia at the wheel end of the vehicle;

determining the motor rotational speed fluctuation frequency of the vehicle; and

generating the damping torque based on at least one of the equivalent moment of inertia at the wheel end of the vehicle and the motor rotational speed fluctuation frequency of the vehicle.

3. The method according to claim 2, wherein the determining the equivalent moment of inertia at the wheel end of the vehicle comprises:

obtaining a rotational speed of a motor; and

determining the equivalent moment of inertia at the wheel end of the vehicle based on an output torque of the motor and the rotational speed of the motor.

4. The method according to claim 2 or 3, wherein the determining the motor rotational speed fluctuation frequency of the vehicle comprises:

obtaining a first rotational speed signal of the motor;

filtering the first rotational speed signal of the motor by using band-pass filters with different center frequencies; and

determining the motor rotational speed fluctuation frequency based on filtering results of the band-pass filters with different center frequencies.

5. The method according to any one of claims 2 to 4, wherein a magnitude of the equivalent moment of inertia at the wheel end is negatively correlated with a magnitude of the damping torque.

6. The method according to any one of claims 2 to 4, wherein a magnitude of the motor rotational speed fluctuation frequency is negatively correlated with a magnitude of the damping torque.

7. The method according to any one of claims 1 to 6, wherein the controlling, based on the damping torque and the target torque, the vehicle to perform energy recovery comprises:

generating an energy recovery response torque based on the target torque;

adding the damping torque and the energy recovery response torque to obtain an energy recovery torque; and

controlling, based on the energy recovery torque, the vehicle to perform energy recovery.

8. The method according to any one of claims 1 to 7, wherein the method further comprises:

obtaining a second rotational speed signal of the motor after the energy recovery torque is output;

determining, based on the second rotational speed signal of the motor, whether the rotational speed of the motor fluctuates abnormally; and

if the rotational speed of the motor does not fluctuate abnormally, controlling, based on the target torque, the vehicle to perform energy recovery.

9. The method according to any one of claims 1 to 8, wherein the method further comprises:

recording a quantity of times or cumulative time of controlling the motor based on the damping torque and the target torque; and

if the quantity of times or cumulative time of controlling the motor based on the damping torque and the target torque exceeds a threshold, outputting an adjustment instruction, wherein the adjustment instruction instructs to adjust a magnitude of the target torque.

10. The method according to any one of claims 1 to 8, wherein the method further comprises:

   recording a quantity of times or cumulative time of controlling the motor based on the damping torque and the target torque; and
   if the quantity of times or cumulative time of controlling the motor based on the damping torque and the target torque exceeds a threshold, outputting a braking instruction, wherein the braking instruction instructs a braking system of the vehicle to perform braking.

11. A vehicle control apparatus, wherein the apparatus comprises:

   an obtaining unit, configured to obtain a target torque;
   a processing unit, configured to generate a damping torque based on at least one of an equivalent moment of inertia at a wheel end of a vehicle and a motor rotational speed fluctuation frequency of the vehicle; and
   a control unit, configured to control, based on the damping torque and the target torque, the vehicle to perform energy recovery.

12. The apparatus according to claim 11, wherein the processing unit is configured to: determine the equivalent moment of inertia at the wheel end of the vehicle; determine the motor rotational speed fluctuation frequency of the vehicle; and generate the damping torque based on at least one of the equivalent moment of inertia at the wheel end of the vehicle and the motor rotational speed fluctuation frequency of the vehicle.

13. The apparatus according to claim 12, wherein the processing unit is configured to: obtain a rotational speed of a motor; and determine the equivalent moment of inertia at the wheel end of the vehicle based on an output torque of the motor and the rotational speed of the motor.

14. The apparatus according to claim 12 or 13, wherein the processing unit is configured to: obtain a first rotational speed signal of the motor; filter the first rotational speed signal of the motor by using band-pass filters with different center frequencies; and determine the motor rotational speed fluctuation frequency based on filtering results of the band-pass filters with different center frequencies.

15. The apparatus according to any one of claims 12 to 14, wherein a magnitude of the equivalent moment of inertia at the wheel end is negatively correlated with a magnitude of the damping torque.

16. The apparatus according to any one of claims 12 to 14, wherein a magnitude of the motor rotational speed fluctuation frequency is negatively correlated with a magnitude of the damping torque.

17. The apparatus according to any one of claims 11 to 16, wherein the control unit is configured to: generate an energy recovery response torque based on the target torque; add the damping torque and the energy recovery response torque to obtain an energy recovery torque; and control, based on the energy recovery torque, the vehicle to perform energy recovery.

18. The apparatus according to any one of claims 11 to 17, wherein the processing unit is further configured to: obtain a second rotational speed signal of the motor after outputting the energy recovery torque; and determine, based on the second rotational speed signal of the motor, whether the rotational speed of the motor fluctuates abnormally; and the control unit is further configured to: if the rotational speed of the motor does not fluctuate abnormally, control, based on the target torque, the vehicle to perform energy recovery.

19. The apparatus according to any one of claims 11 to 18, wherein the apparatus further comprises:

   a recording unit, configured to record a quantity of times or cumulative time of controlling the motor based on the damping torque and the target torque, wherein
   the control unit is further configured to: if the quantity of times or cumulative time of controlling the motor based on the damping torque and the target torque exceeds a threshold, output an adjustment instruction, wherein the adjustment instruction instructs to adjust a magnitude of the target torque.

20. The apparatus according to any one of claims 11 to 18, wherein the apparatus further comprises:

   a recording unit, configured to record a quantity of times or cumulative time of controlling the motor based on the damping torque and the target torque, wherein
the control unit is further configured to: if the quantity of times or cumulative time of controlling the motor based on the damping torque and the target torque exceeds a threshold, output a braking instruction, wherein the braking instruction instructs a braking system of the vehicle to perform braking.

21. A vehicle, wherein the vehicle comprises the vehicle control apparatus according to any one of claims 11 to 20 and a motor, and the vehicle control apparatus is connected to the motor.

22. A computer-readable storage medium, wherein the computer-readable storage medium is configured to store program code executed by a processor, and the program code comprises instructions used to implement the method according to any one of claims 1 to 10.

23. A computer program, wherein the computer program comprises computer program code; and when the computer program code is run by a computer, the computer is enabled to execute instructions of the method according to any one of claims 1 to 10.

FIG. 1

FIG. 2

S101

Obtain a target torque

S102

Generate a damping torque based on at least one of an equivalent moment of inertia at a wheel end of a vehicle and a motor rotational speed fluctuation frequency of the vehicle

S103

Control, based on the damping torque and the target torque, the vehicle to perform energy recovery

FIG. 3

Obtain a target torque — S201

Determine an equivalent moment of inertia at a wheel end of a vehicle — S202

Determine a motor rotational speed fluctuation frequency of the vehicle — S203

Generate a damping torque based on at least one of the equivalent moment of inertia at the wheel end of the vehicle and the motor rotational speed fluctuation frequency of the vehicle — S204

Generate an energy recovery response torque based on the target torque — S205

Add the damping torque and the energy recovery response torque to obtain an energy recovery torque — S206

Control, based on the energy recovery torque, the vehicle to perform energy recovery — S207

Obtain a second rotational speed signal of a motor — S208

Determine, based on the second rotational speed signal of the motor, whether a rotational speed of the motor fluctuates abnormally — S209

Recalculate the energy recovery torque — S211

Control, based on the recalculated energy recovery torque, the vehicle to perform energy recovery — S212

Control, based on the target torque, the vehicle to perform energy recovery — S210

FIG. 4

301

Motor rotational
speed fluctuation
frequency
determining
module

303

First factor
determining
module

305

First calculation
module

306

Second
calculation
module

302

Equivalent
moment of
inertia
calculation
module

304

Second factor
determining
module

FIG. 5

401

Obtaining
unit

402

Processing
unit

403

Control unit

404

Recording
unit

FIG. 6

900

Vehicle control device

901                   905                                903

Processor          Processor                        Memory          910

CPU 0              CPU 0                    Program
                                            code
CPU 1              CPU 1

904

Communication
interface

FIG. 7

## INTERNATIONAL SEARCH REPORT

| International application No. |
| --- |
| **PCT/CN2022/117074** |

### A. CLASSIFICATION OF SUBJECT MATTER

B60L7/10(2006.01)i

According to International Patent Classification (IPC) or to both national classification and IPC

### B. FIELDS SEARCHED

Minimum documentation searched (classification system followed by classification symbols)

IPC:B60L

Documentation searched other than minimum documentation to the extent that such documents are included in the fields searched

Electronic data base consulted during the international search (name of data base and, where practicable, search terms used)

CNTXT, CNKI, VEN: 波动, 频率, 电机, 电机, 转速, 惯量, 回收, 滤波, 马达, 目标扭矩, 能量回收, 输出扭矩, 转动惯量, 转矩, 阻尼扭矩, energy, recovery, recycle, motor, torque, frequency, fluctuation, damping

### C. DOCUMENTS CONSIDERED TO BE RELEVANT

| Category* | Citation of document, with indication, where appropriate, of the relevant passages | Relevant to claim No. |
| --- | --- | --- |
| Y | CN 101021263 A (GM GLOBAL TECHNOLOGY OPERATION INC.) 22 August 2007 (2007-08-22) description, page 11 paragraph 2-page 13 paragraph 2, and figures 1-2 | 1-23 |
| Y | CN 114466763 A (ZHEJIANG GEELY HOLDING GROUP CO., LTD.; GEELY AUTOMOBILE RESEARCH INSTITUTE (NINGBO) CO., LTD.) 10 May 2022 (2022-05-10) description, paragraphs 0082-0113, and figure 3 | 1-23 |
| A | CN 109219545 A (NISSAN MOTOR CO., LTD.) 15 January 2019 (2019-01-15) entire document | 1-23 |
| A | CN 111332126 A (BEIJING INSTITUTE OF TECHNOLOGY) 26 June 2020 (2020-06-26) entire document | 1-23 |
| A | JP 2017100580 A (AISIN SEIKI CO., LTD.) 08 June 2017 (2017-06-08) entire document | 1-23 |
| A | JP 2019166936 A (NISSAN MOTOR CO., LTD.) 03 October 2019 (2019-10-03) entire document | 1-23 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 February 2023** | **27 February 2023** |

| Name and mailing address of the ISA/CN | Authorized officer |
| --- | --- |
| **China National Intellectual Property Administration (ISA/CN)**  **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/117074**

| Patent document cited in search report | | | Publication date (day/month/year) | Patent family member(s) | | | Publication date (day/month/year) |
|---|---|---|---|---|---|---|---|
| CN | 101021263 | A | 22 August 2007 | US | 7154236 | B1 | 26 December 2006 |
| | | | | DE | 102007006864 | A1 | 30 August 2007 |
| | | | | DE | 102007006864 | B4 | 04 June 2020 |
| CN | 114466763 | A | 10 May 2022 | None | | | |
| CN | 109219545 | A | 15 January 2019 | MX | 2018013955 | A | 21 March 2019 |
| | | | | MX | 367762 | B | 05 September 2019 |
| | | | | KR | 20190007089 | A | 21 January 2019 |
| | | | | KR | 101957120 | B1 | 11 March 2019 |
| | | | | JPWO | 2017212581 | A1 | 22 March 2019 |
| | | | | JP | 6607313 | B2 | 20 November 2019 |
| | | | | MY | 177823 | A | 23 September 2020 |
| | | | | BR | 112018075243 | A2 | 12 March 2019 |
| | | | | BR | 112018075243 | B1 | 06 December 2022 |
| | | | | WO | 2017212581 | A1 | 14 December 2017 |
| | | | | US | 2019299967 | A1 | 03 October 2019 |
| | | | | US | 10507819 | B2 | 17 December 2019 |
| | | | | CA | 3026994 | A1 | 14 December 2017 |
| | | | | CA | 3026994 | C | 30 April 2019 |
| | | | | EP | 3470284 | A1 | 17 April 2019 |
| | | | | EP | 3470284 | A4 | 19 June 2019 |
| | | | | EP | 3470284 | B1 | 29 April 2020 |
| | | | | RU | 2707471 | C1 | 26 November 2019 |
| CN | 111332126 | A | 26 June 2020 | None | | | |
| JP | 2017100580 | A | 08 June 2017 | JP | 6627463 | B2 | 08 January 2020 |
| JP | 2019166936 | A | 03 October 2019 | JP | 7135361 | B2 | 13 September 2022 |

Form PCT/ISA/210 (patent family annex) (July 2022)